# EUROPEAN PATENT APPLICATION

(11) **EP 4 462 299 A1**
(43) Date of publication of application: **13.11.2024**
(21) Application number: 22929273.5
(22) Date of filing: 02.03.2022
(51) Int. Cl.: G06F 30/20, G06Q 10/00

(54) **DYNAMIC WORKFLOW IMPLEMENTATION METHOD AND SYSTEM, MEDIUM, AND PROGRAM PRODUCT**

(71) Applicant: Siemens Aktiengesellschaft, 80333 München (DE)
(72) Inventor: ZHOU, Zhenhua, Shanghai 200120 (CN); ZHU, Xiaoxun, Beijing 100102 (CN)
(74) Representative: Isarpatent
(86) International application number: PCT/CN2022/078725
(87) International publication number: WO 2023/164822

(57) **Abstract**

A workflow implementation method and system, a medium, and a program product. The method comprises: constructing a behavior tree comprising a plurality of function block nodes and connections thereof, wherein at least one of the plurality of function block nodes is bound to a dynamic resource, and the dynamic resource is a placeholder for reference to a plurality of resource instances in a same type; and analyzing the behavior tree to obtain a workflow representing service operations to be performed by resources comprising the dynamic resource in one work unit, and deploying the workflow to runtime of the corresponding work unit, so that the runtime determines a resource instance of the dynamic resource according to on-site resource data, and controls resources comprising the resource instance to perform operations according to the workflow.

## Description

### TECHNICAL FIELD

Embodiments of this application relate to the field of industrial technology, and in particular, to a dynamic workflow implementation method and system, a computer-readable storage medium, and a computer program product.

### BACKGROUND

A workflow can be simply defined as a description of a series of operations. The workflow is widely used in the field of automation system, artificial intelligence, robot, and the like. For example, a workflow of a product sorting line in an automation system can simply be described as starting, photographing, sorting, and moving products to a target position. A model deployment workflow in the field of artificial intelligence may be described as data collection, data annotation, model training, and model deployment.

However, currently, these workflows only have text descriptions. If users want to execute such workflows, they need to follow the text descriptions and may use a variety of engineering tools. However, these tools are almost unrelated to each other and provide completely different user operation behaviors, which is not only a challenge to the users, but also greatly increases costs, reduces efficiency, and limits flexibility due to a long development cycle. For example, in the field of artificial intelligence, the users need to use a tool for data collection, manually or use other tools for data annotation, write python scripts for model training, and also need deployment tools for deployment.

In view of this, a person skilled in the art is still working on finding other workflow solutions.

### SUMMARY

Embodiments of this application provide a workflow implementation method and system, a computer-readable storage medium, and a computer program product, to quickly and conveniently implement workflow creation.

According to a first aspect, a dynamic workflow implementation method is provided and includes: constructing a behavior tree including a plurality of function block nodes and connection relationships between the function block nodes, where at least one of the plurality of function block nodes is bound to a dynamic resource, and the dynamic resource is a placeholder for reference to a plurality of resource instances of a same type; and analyzing the behavior tree to obtain a workflow representing service operations to be performed by resources including the dynamic resource in one workcell, and deploying the workflow to runtime of the corresponding workcell, so that the runtime determines a resource instance of the dynamic resource based on on-site resource data, and controls resources including the resource instance to perform the operations based on the workflow.

According to a second aspect, a dynamic workflow implementation system is provided and includes: a behavior tree construction module, configured to construct a behavior tree including a plurality of function block nodes and connection relationships of the function block nodes, where at least one of the plurality of function block nodes is bound to a dynamic resource, and the dynamic resource is a placeholder for reference to a plurality of resource instances of a same type; and an analysis and deployment module, configured to analyze the behavior tree to obtain a workflow representing service operations to be performed by resources including the dynamic resource in one workcell, and deploy the workflow to runtime of the corresponding workcell, so that the runtime determines a resource instance of the dynamic resource based on on-site resource data, and controls resources including the resource instance to perform the operations based on the workflow.

According to a third aspect, a dynamic workflow implementation system is provided and includes: at least one memory, configured to store computer-readable code; and at least one processor, configured to call the computer-readable code to perform the steps of the dynamic workflow implementation method in the first aspect.

According to a fourth aspect, an IT domain and OT domain fusion system is provided and includes an IT device and the workflow implementation system in any one of the foregoing implementations. The workflow is an OT-domain workflow. The workcell is a workcell in an OT domain. The resources are OT resources. The dynamic workflow implementation system further includes: an OT-domain microservice generator, configured to generate one microservice based on the behavior tree, to enable the IT device to trigger, by calling the microservice, runtime of the workcell to execute the OT-domain workflow.

According to a fifth aspect, a computer-readable medium is provided. The computer-readable medium stores computer-readable instructions. The computer-readable instructions, when executed by a processor, enable the processor to perform the steps of the method in the first aspect.

According to sixth aspect, a computer program product is provided. The computer program product is tangibly stored on a computer-readable medium and includes computer-readable instructions. The computer-readable instructions, when executed, enable at least one processor to perform the steps of the method in the first aspect.

In embodiments of this application, operations that can be performed by corresponding types of resources are encapsulated into corresponding function block nodes and bound to the corresponding resources, especially the dynamic resource is bound to the corresponding function block nodes, and the runtime determines the resource instance of the dynamic resource based on the on-site resource data. Therefore, sharing a dynamic workflow with a resource is implemented. Moreover, a purpose of controlling the workcell to perform operations based on the workflow is achieved. Because the function block nodes are reusable, decoupling of a specific service and an engineering platform is achieved. In addition, organizing nodes in a form of the behavior tree can generate an intuitive workflow operation process from development to implementation. Therefore, the complexity of workflow implementation is reduced.

For any one of the foregoing aspects, optionally, the workflow is an OT-domain workflow. The workcell is a workcell in an OT domain. The device is an OT device. In this way, development and implementation of the workflow in the OT domain is achieved.

For any one of the foregoing aspects, optionally, one microservice is generated based on the OT-domain workflow, to enable an IT device in an IT domain to trigger, by calling the microservice, runtime of a main controller of the workcell to execute the OT-domain workflow. In this way, the IT device can call microservices generated based on the OT-domain workflow, thereby triggering execution of an OT-workflow and implementing integration of the IT domain and the OT domain.

### BRIEF DESCRIPTION OF THE DRAWINGS

FIG. 1A is a schematic flowchart of a workflow implementation method according to an embodiment of this application;
FIG. 1B is an example diagram of a resource knowledge graph in an example of this application;
FIG. 1C is an example diagram in which function block nodes are associated resource nodes in an example of this application;
FIG. 1D is a schematic diagram of dynamic resources in an example of this application;
FIG. 1E is a schematic flowchart of another workflow implementation method according to an embodiment of this application;
FIG. 1F is a schematic flowchart of a dynamic workflow implementation method according to an embodiment of this application;
FIG. 2A is a schematic diagram of a behavior tree created in an example of this application;
FIG. 2B to FIG. 2S are respectively schematic diagrams of a partial behavior tree created in an example of this application;
FIG. 2T shows an example of constructing a behavior tree based on function block nodes of a function block typed diagram in an example of this application;
FIG. 2U to FIG. 2X are respectively schematic diagrams of hiding or displaying a data input port or a data output port in an example of this application;
FIG. 2Y is a schematic diagram of an example of this application in which data blocks are added to four function block nodes in a behavior tree and corresponding data is displayed in each data block;
FIG. 3A is a schematic diagram of a structure of a workflow implementation system according to an embodiment of this application;
FIG. 3B is a schematic diagram of a structure of a workflow implementation system according to an embodiment of this application;
FIG. 3C is a schematic diagram of a structure of a workflow implementation system according to an example of this application;
FIG. 4A to FIG. 4E are schematic diagrams of a workflow implementation system according to embodiments of this application; and
FIG. 5 is a schematic diagram of hardware implementation of a workflow implementation system according to an embodiment of this application.

Reference numeral list:
S11A to S14; S11B to S14; 101 and 102: steps of a workflow implementation method
201: function block name
202: function block header
203: link input port
204: link output port
205: link connection
206: sensitive region
207: instruction label
208: input data set block
209: output data set block
210: data input port
211: data output port
212: data connection
213: function block icon
214: function block main body
215: data block label
216: data block body
217: monitoring link
110: node library
120: graphical interface module
130: editing processing module
140: analysis and deployment module
150: resource library
100: OT-domain low code development platform
10: OT-domain low code development tool
20: OT-domain microservice generator
30: runtime of a main controller of a workcell
31: format conversion module
32: code actuator
33: scheduler
331: constructor
332: NLA actuator
333: dynamic resource injector
34: execution engine module
341: interpreter
342: compiler
343: another interpreter adapter
35: debugging module
36: openness interface
37: community-driven openness
38: text-driven element
39: microservice interface
310: function block node management module
311: function block node aggregation
312: general API interface
313: data monitoring module
40: microservice
50: third party apparatus
200: knowledge platform
300: IT-domain code development platform
301: IT-domain code development tool
51: at least one memory
52: at least one processor
53: at least one display
54: bus

### DETAILED DESCRIPTION

A subject described in this specification is discussed now with reference to exemplary implementations. It should be understood that, discussion of the implementations is merely intended to make a person skilled in the art better understand and implement the subject described in this specification, and is not intended to limit the protection scope of the claims, the applicability, or examples. Changes may be made to the functions and arrangements of the discussed elements without departing from the protection scope of the content of embodiments of this application. Various processes or components may be omitted, replaced, or added in each example according to requirements. For example, the described method may be performed according to a sequence different from the sequence described herein, and steps may be added, omitted, or combined. In addition, features described in some examples may alternatively be combined in other examples.

As used in this specification, the term "include" and variants thereof represent open terms, and means "include but is not limited to". The term "based on" represents "at least partially based on". The terms "one embodiment" and "an embodiment" represent "at least one embodiment". The term "another embodiment" represents "at least one another embodiment". The terms "first", "second", and the like may represent different objects or the same object. Other definitions may be included explicitly or implicitly in the following. Unless otherwise clearly specified, the definition of one term is consistent in the entire specification.

The following describes embodiments of this application in detail with reference to the accompanying drawings.

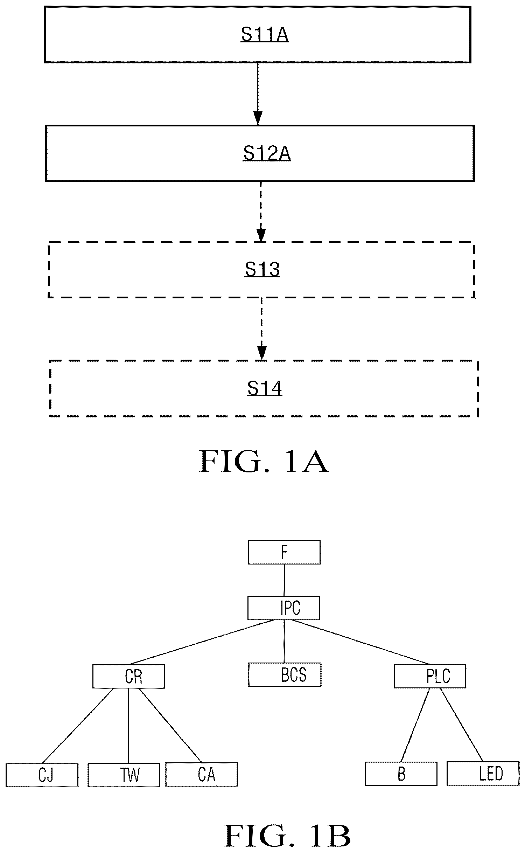

FIG. 1A is a schematic flowchart of a workflow implementation method according to an embodiment of this application. As shown in FIG. 1A, the method may include the following steps.

Step S11A: Receive a behavior tree construction operation performed by a user based on preset behavior tree nodes on a graphical user interface.

In this embodiment, a behavior tree is configured to represent a workflow, and the workflow is configured to define operations to be performed by a workcell. For example, the workflow may represent distributed processes within the workcell. During specific implementation, the workflow here may be further subdivided into a main workflow and a sub workflow. The main workflow is used to define the start, end, and other flow controls that trigger the entire workcell process. The main workflow is an entry point of the entire process and is linked to at least one sub workflow. The sub workflow is usually a main workflow, and each sub workflow corresponds to a sub-process and is used to implement specific service operations.

A workcell (workcell) may be a combination of resources such as a system or a device that can implement a complete and independent control process and operation. In this embodiment, the workflow is created using the workcell as a basic unit, which is more in line with the characteristics of industrial control, can improve the integration of development, and can reduce the complexity of development. For example, using the field of industrial technology as an example, the workcell may be defined based on actual industrial scenarios. For example, that a process corresponds to a workcell may be defined, or that a work station in a process is a workcell may be defined, or that a workstation in a work station corresponds to a workcell may be defined. Different workcells have different process flows.

In this embodiment, the behavior tree nodes may include a flow control node and a function block node. The following describes the flow control node and the function block node separately in detail.

### I. Flow control node

The flow control node is configured to implement a logical control in a workflow and is usually independent of a specific service operation in the workcell. A user may create various workflows according to their needs by using the flow control node.

In specific implementation, the flow control node may include a main control node, a logical control node, a condition node, and the like. Alternatively, the flow control node may include one or any combination of the main control node, the logical control node, and the condition node. The following makes simple descriptions respectively on the main control node, the logical control node, and the condition node.

### 1. Main control node

The main control node may include some or all of a start (Start) node, an end (End) node, a goto (Goto) node, an anchor (Anchor) node, a stop (Stop) node, and an abort (Abort) node.

The main control node in this embodiment is not a standard behavior tree element, but in this embodiment, the main control node may be used to control a main process of a workflow and may be linked to a state machine of the workflow. The start node is mandatory. Furthermore, one of the end node and the goto node may also be mandatory. The main control node is mainly used to define start and end of the workflow. Furthermore, other element nodes may control the state machine (such as abort and stop) or mark anchor process steps that may be jumped (such as the anchor node).

### 2. Logical control node

The logical control node may include some or all of a sequence (Se, Sequence) node, a reactive sequence (RSe, Reactive Sequence) node, a parallel (Pa, Parallel) node, an in-process quality control (IPQ, In-Process QC) node, a priority (Pr, Priority (Fallback)) node, a reactive priority (RPr, Reactive Priority (Fallback)) node, an if-then-else (ITE, If-Then-Else) node, and a switch (Sw, Switch) node.

The logical control node may define how to execute branches in a behavior tree and is configured to implement a branch logic control and the like in a workflow. Each node is briefly described below.
(1) The sequence node is a node that may have one or more sub-nodes and is to trigger routing to each sub-node in sequence according to an order of the workflow.
(2) The reactive sequence node has the same function as the sequence node but is to continue to check a trigger condition.
(3) The parallel node is a node that may have one or more sub-nodes started in sequence from top to bottom. All sub-nodes are executed simultaneously in a plurality of processes or a plurality of threads.
(4) The in-process quality control node: A quality engineer performs quality inspection on a part of process steps. If the inspection fails, an exception handling process is to be performed. If the inspection succeeds, the process is to be continued.
(5) The priority node: Each sub-branch is executed in order according to priority. If execution of the previous sub-branch fails, the next sub-branch is executed. If any branch is successfully executed, the process ends.
(6) The reactive priority node has the same function as the priority node, but is to continue to check a trigger condition.
(7) The if-then-else node checks a trigger expression. If true, a true branch is executed, and if false, a false branch is executed.
(8) The switch node checks a trigger expression and executes different branches based on different conditions. If the conditions are not satisfied, a default branch is executed.

Typically, the sequence node and the parallel node may drive most of the logic in a workflow.

### 3. Condition (C, Condition) node

The condition node is usually a basic logical element that checks an expression in a behavior tree and is configured to perform condition determining and return a determining result. The condition node returns a result indicating success or failure depending on whether the condition is true. The condition node does not return to a running status.

Furthermore, in another implementation, the condition node may also be included in the function block node. Alternatively, the condition node may be used as a separate type of node.

### II. Function Block (FB, Function Block) node

The function block node is configured to execute commands and implement service operations in the workflow. Normally, if the operation is completed correctly, success is returned. If the operation fails, failure is returned. When the operation is in progress, running is returned.

In this embodiment, the function block node includes logical nodes and may further include some specific types of function block nodes, for example, may include some or all of a manual (Manual) node, a dynamic (Dynamic) node, a delay (Delay) node, and an empty (Empty (idle)) node. The dynamic injection node is configured to dynamically an inject node instance at runtime. The manual node represents a manual step of stopping at a current node before acquiring a confirmation signal, and exiting after acquiring the confirmation signal. The delay node means exiting the current node after delaying specified time. The empty node represents, without performing any operations, a placeholder that may be replaced by any function block node. Each logical node may correspond to an operation template, and each operation template predefines an operation that can be performed at least one type of resource (such as a collaborative robot device, a PLC class device, or the like). For example, the operations may include an action, a method, or a skill.

During specific implementation, each operation template may include an interface part and an implementation part. The implementation part may be an application (for example, a containerized application) that contains functional code and running dependencies. The application may run independently and be exposed to the outside world through a specific network communication interface. The interface part may be a logical node presented as a graphical element. To be specific, like other behavior tree nodes, the logical node may be dragged-and-dropped, connected, and configured in a graphical user interface. In specific implementation, each logical node may have a parameter panel for setting parameters of the logical node, such as input and output parameters. Certainly, these input and output parameters may alternatively be preset to default values.

The logical nodes may be configured and executed independently. When the logical nodes in the behavior tree are executed, input configured by a user for the logical nodes is to be read and transferred to the implementation part of the operation templates, that is, a corresponding application. After completing a specific operation such as model conversion, an operation result such as a converted model is to be converted back to output of the logical nodes.

In this embodiment, the interface part and implementation part of the operation template may be stored separately. For example, a node library may only store the interface part, that is, the logical nodes, and the implementation part may be stored in a node service module. In this embodiment, the node service module may be referred to as runtime (Runtime). The node service module may be located on a server or locally.

Optionally, the foregoing logical nodes follow an information model of runtime interaction with a main controller. In this way, communication between the workflow and the main controller of various resources is standardized.

In addition, it is considered that a service operation corresponding to a function block node may be performed by different entities, for example, a specific physical device, a person, or another virtualized noun resource. For the convenience of description, in this specification, these physical device, person, virtualized noun resources, and the like are collectively referred to as resources. These resources usually are resources that can execute the workflow on site and that are used as entities of operations.

During specific implementation, the resource used as an execution entity of the operation execution may be used as a common configuration parameter of the function block node to perform corresponding resource configuration on a required function block node when creating the behavior tree. Alternatively, when creating a function block node, a resource is configured as the execution entity of the operation for the function block node, so that when creating the behavior tree, there is no need to configure the resource for the required function block node.

Alternatively, to facilitate management of resources, these resources may be represented in the form of resource nodes, and these resource nodes may be stored in the form of a resource knowledge graph (also referred to as the resource tree). The resource knowledge graph includes each resource node and connection lines representing relationships between the resource nodes. For example, FIG. 1B is an example diagram of a resource knowledge graph in an example. As shown in FIG. 1B, the resource knowledge graph is a factory resource knowledge graph that describes real system configuration of a factory. A factory (F, Factory) node has an industrial personal computer (IPC) node. The industrial personal computer (IPC) node has a collaborative robot (CR, Cooperative Robot) node, a PLC node, and a bar code scanner (BCS, Bar Code Scanner) node. The collaborative robot (CR, Cooperative Robot) node has a clamping jaw (CJ, Clamping Jaw) node, a torque wrench (TW, Torque Wrench) node, and a camera (CA, Camera) node. The PLC node has a button (B, Button) node and an LED alarm light node. Certainly, in some applications, there may be two or more devices of a certain type, such as a collaborative robot, and each device of this type of device may be distinguished by a label or a model. This is not be described herein again.

Each function block node may be associated with a resource node to instantiate the function block node into an operation of a corresponding resource. For example, a specific logical node may be associated with a device resource node to be instantiated as an operation of the corresponding device. During specific implementation, a resource header (Header) may be set for the function block node, and a resource associated with the function block node is to be displayed in the resource header.

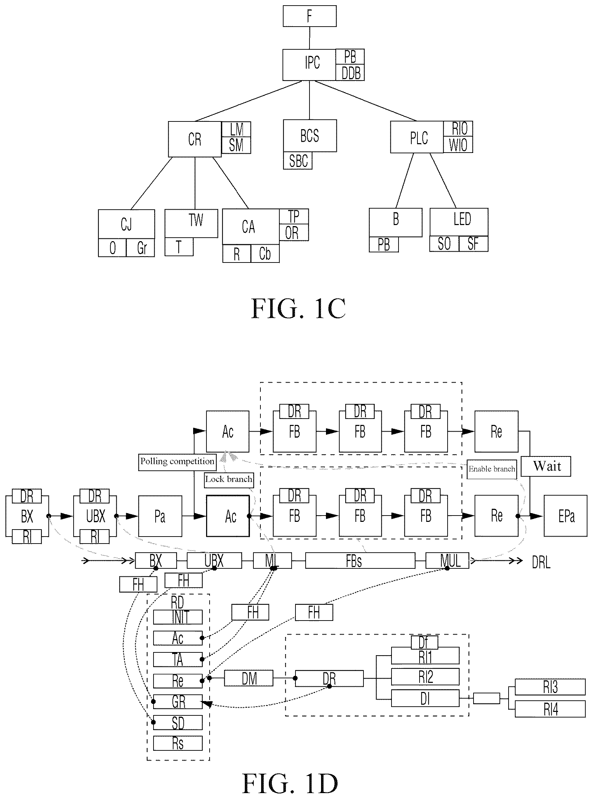

The specific association process may be implemented in many different ways. For example, each resource node may be associated with a corresponding function block node in advance, so that when creating the behavior tree, the function block node associated with the corresponding resource can be directly pulled, without the need for temporary configuration. For example, FIG. 1C is an example diagram in which function block nodes are associated with resource nodes in an example. As shown in FIG. 1C, resources shown in the resource knowledge graph shown in FIG. 1B are respectively associated with corresponding function block nodes. The industrial personal computer (IPC) node is associated with a press button (PB, Press Button) node and a display dialog box on screen (DDB, Display Dialog Box on Screen) node. The collaborative robot (CR, Cooperative Robot) node is associated with a linear move (LM, Linear Move) node and a shutdown mobile (SM, Shutdown Mobile) node. The PLC node is associated with a read I/O (RIO, Read I/O) node and a write I/O (WIO, Write I/O) node. The bar code scanner (BCS, Bar Code Scanner) node is associated with a scan bar code (SBC, Scan Bar Code) node. The CJ (Clamping Jaw) node is associated with an open (0, Open) node and a grab (Gr, Grab) node. The torque wrench (TW, Torque Wrench) node is associated with a twist (T, Twist) node. The camera (CA, Camera) node is associated with a register (R, Register) node, a calibration (Cb, Calibration) node, a take photo (TP, Take Photo) node, and an object recognition (OR, Object Recognition) node. The button (B, Button) node is associated with the press button (PB, Press Button) node. The LED alarm light node is associated with a switch on (SO, Switch On) node and a switch off (SF, Switch Off) node.

Alternatively, resource nodes may not be associated with the function block node in advance, but be associated with a corresponding resource node with the required function block node when creating the behavior tree.

Alternatively, there may be a function block node that is associated with a resource node in advance (which may be referred to as a dedicated function block node) and a function block node that is not associated with a resource node (which may be referred to as a general function block node). Because although the general function block node is not associated with an on-site resource, the simulation of a workflow corresponding to a behavior tree including the function block node is not affected. For example, a specific collaborative robot may not have been purchased yet. To verify the implementability, a corresponding general function block node may be used for simulation in advance. When the implementability is determined, the purchase is started.

In addition, it is considered that resources for performing service operations of certain function block nodes in some applications may not be fixed. For example, for human resources, there may be different workers working at different time points, and there may be personnel changes, such as changes in workstations or positions, or someone resigning and someone joining the job. For another example, for device resources such as robots, a location of the robot may be changed, the robot may alternatively be eliminated or added, or the like. Therefore, in this embodiment, a type of dynamic resource (Dynamic Resource, DR) may be further set. The dynamic resource is a specific type of resource.

FIG. 1D is a schematic diagram of a dynamic resource in an example of the present invention. As shown in FIG. 1D, the dynamic resource may be a placeholder for reference to a plurality of resource instances (Resource Instance) RI1 and RI2 of the same type. The plurality of resource instances may be represented in the form of a resource tree as shown in the lower right corner of FIG. 1D, and one resource instance may be set as a default resource instance (Df), such as setting RI1 as the default resource instance. Further, to enable the dynamic resource to expand new resource instances, in this embodiment, a dynamic injection (Dynamic Injection, DI) node for adding new resource instances may be further set for the dynamic resource, so that runtime (which is to be discussed below) can inject new resource instances, such as RI3 and RI4, into the dynamic resources based on on-site resource data.

During specific implementation, the dynamic resource may have a resource description, as shown in the lower left corner of FIG. 1D. The resource description (Resource Description, RD) has placeholders of method steps (also referred to as a domain method (Domain Method, DM)) for guiding instantiation of the dynamic resource. In this embodiment, the method steps for guiding instantiation of the dynamic resource may include:
Set Default (Set Default, SD), configured for indicating that an available resource instance among the plurality of resource instances of the dynamic resource is determined based on the on-site resource data, and a default resource instance is determined
Get Resource (Get Resource, GR), configured for indicating that a resource instance is specified for the dynamic resource based on the on-site resource data;
Acquire (Acquire, Ac), configured for indicating that the dynamic resource is locked, when a plurality of branches in a parallel workflow use a same dynamic resource simultaneously, for a current branch by triggering an Acquire message and obtaining a response, to ensure other branches be stopped;
Try Acquire (TA), configured for indicating that the dynamic resource is locked, when the plurality of branches in the parallel workflow use a same dynamic resource simultaneously, for a current branch by triggering a Try Acquire message and regardless of whether a response is received, to ensure other branches be stopped, where
Acquire (Acquire, Ac) and Try Acquire (Try Acquire, TA) are two different resource acquisition messages; and
Release (Release, Re), configured for indicating that the dynamic resource is released to another branch by triggering resource release after execution of the current branch ends.

In addition, the method steps may further include Init (Init, INIT) and Reset (Reset, Rs).

The placeholder of each method step is connected to one function block node that implements the method step. For example, the placeholder of the method step may be connected, through a hook function (such as a function block hook (FBHook, FH)), to one function block node that implements the method step. All relevant function block nodes jointly generate a corresponding dynamic resource flow (Dynamic Resource Flow, DRF), as shown in the middle of FIG. 1D. The dynamic resource flow may be presented in the form of a sub-behavior tree on the graphical user interface, as shown in the upper part of FIG. 1D. When constructing a behavior tree, only function block nodes that need to use the dynamic resources to perform corresponding service operations, such as three functional block (FB) nodes in dashed line boxes DB1 and DB2 in two branches of parallel (Parallel, Pa) execution in the upper middle of FIG. 1D, are bound to a dynamic resource (DR). Then, a dynamic resource flow inherent to the dynamic resource is to be automatically added to the corresponding location. In FIG. 1D, EPa represents end parallel (End Parallel).

In this embodiment, Set Default (Set Default, SD) is connected to a boxing (Boxing, BX) function block (Function Block, FB). Get Resource (Get Resource, GR) is connected to an unboxing (Unboxing, UBX) function block. Acquire (Acquire, Ac) and Try Acquire (Try Acquire, TA) are connected to a mutex lock (Mutex Lock, ML) function block. Release (Release, Re) is connected to a mutex unlock (Mutex Unlock, MUL) function block.

That the boxing function block is configured to initialize the dynamic resource includes: determining an available resource instance among the plurality of resource instances of the dynamic resource based on the on-site resource data, and determining the default resource instance. For example, in one example, assuming that three available resource instances are determined, and a closest resource instance is preset to be used as a current resource instance for execution a preset condition that the function block node is bound to the dynamic resource, the runtime is to be searched, from three available resource instances, a resource instance that satisfies the preset condition, and the resource instance that satisfies the preset condition is determined as the current resource instance. If there is no resource instance that satisfies the preset condition, a determined default resource instance is used as the current resource instance.

The mutex lock function block is configured to lock, when a plurality of branches in a parallel workflow use a same dynamic resource simultaneously, the dynamic resource for a current branch by triggering a resource acquisition message. Each branch includes at least one function block node, that is, at least one function block node bound to the dynamic resource when the behavior tree is constructed. The mutex unlock function block is configured to release the dynamic resource to another branch after execution of the current branch ends. The another branch uses a polling competition (Polling Competitor) manner to trigger the resource acquisition message to lock the dynamic resource for the current branch when the dynamic resource is released. For example, assuming that no preset condition is set for the available resource instance, each resource instance may lock the dynamic resource by triggering the resource acquisition message to acquire the qualification for execution of the function block node to be bound to the dynamic resource. For example, if in two branches in the upper part of FIG. 1D, two workers in the same dynamic resource respectively perform service operations of the same function block node, the two workers can ensure service operations of function block nodes in the dashed line boxes currently performed by the two workers by triggering the resource acquisition message. It is assumed that a worker in the lower branch have acquire the qualification to perform service operations of the function block nodes in the dashed line box (in other words, the worker in the lower branch have become the current resource instance of the dynamic resource). At this time, a worker in the upper branch needs to wait until the worker in the lower branch complete the operation before the worker in the upper branch can acquire the qualification to perform the operation.

The unboxing function block is configured to specify a resource instance for the dynamic resource based on the on-site resource data. In practical application, the unboxing function block is not necessary in the dynamic resource flow. Unless specifically needed, a specific dynamic resource is to be specified to perform service operations of the function block node bound to the dynamic resource.

In addition, this embodiment may further include the following decorator node.

### III. Decorator node

The decorator node is mainly used to decorate a function block node driven by a logical control node, for example, may be used to decide whether a branch or even a single node in a behavior tree may be executed, and may include: some or all of a repeat (Rp, Repeat) node, a retry (Rt, Retry) node, a one-shot (OS, One-Shot) node, a timeout (TO, Timeout) node, a timer (Tm, Timer) node, an inverter (Iv, Inverter) node, a force run (FR, Force Run) node, a force OK (FO, Force OK) node, a force failed (FF, Force Failed) node, and a guard (G, Guard) node. The following is a brief description of each decorator node.
(1) The inverter node may have one sub-node and is configured to invert the sub-node. If the sub-node fails, success is returned; If the sub-node succeeds, failure is returned.
(2) The force OK node may have one sub-node (such as a function block node) and always returns success regardless of whether the sub-node of the force OK node succeeds.
(3) The force failed node may have one sub-node (such as a function block node) and always return failure regardless of whether the sub-node of the force failed node succeeds.
(4) The repeat node may have one sub-node (such as a function block node) and may execute the sub-node of the repeat node repeatedly a fixed number of times.
(5) The retry node may have one sub-node (such as a function block node) and may trigger the sub-node of the retry node up to N times. If the sub-node of the retry node returns failure, retry is performed and the number of times is reduced by one. When the number of retries is zero, success is returned. If the sub-node returns success, the loop is interrupted and success is also returned. N is a positive integer.
(6) The one-shot node may have one sub-node, means that the sub-node is only be executed once in a workflow, and is not be executed again before restarting the workflow.
(7) The timeout node may have one sub-node and is configured to time execution time of the sub-node (such as a function block node) of the timeout node. When the specified time is exceeded, the execution exits (even if the execution is not completed).
(8) The timer node may have a sub-node, and after the specified time is reached, the sub-node (such as a function block node) is executed.
(9) The force run node may have one sub-node, and is forced to return to a running status regardless of whether the sub-node (such as a function block node) of the force run node has been executed.
(10) The guard node may have at least one sub-node; be configured to guard statuses of all sub-nodes of the guard node; and report an error when any sub-node executes an error, and return Normal when all sub-nodes are normal.

In another implementation, the decorator node may alternatively be included in the flow control node. To be specific, the flow control node may include all or some of the main control node, the logical control node, and the decorator node.

In this embodiment, the behavior tree nodes may be listed on the graphical user interface in the form of an icon. The user determines nodes required to create the workflow by selecting and dragging the icon to add to a canvas. Further, necessary parameter configuration may also be performed on the nodes, such as resource configuration and/or input and output parameter configuration. If a workcell needs to perform two or more operations, that is, there are two or more operations defined in the required workflow, the behavior tree corresponding to the workflow may include a plurality of function block nodes. A corresponding flow control node may be provided based on the order and mutual relationship of the operations. The behavior tree corresponding to the workflow is finally generated by arranging and connecting the dragged nodes accordingly. The behavior tree construction operation includes an addition and line connection operation on the behavior tree nodes. Further, the behavior tree construction operation may further include operations to associate resources for added function block nodes. In addition, the behavior tree construction operation may further include a configuration operation of input and output parameters of the behavior tree nodes.

Step S12A: In response to the behavior tree construction operation, generate a behavior tree corresponding to a workflow representing service operations to be performed by each resource in a workcell. Some or all function block nodes in the behavior tree may be associated with resources that perform corresponding service operations.

Generally, for a workflow that needs to be implemented by on-site resources, all function block nodes in the behavior tree need to be associated with resources that perform corresponding service operations. For an action flow that does not require on-site resources to be implemented temporarily, such as a workflow that performs simulations, there is no need for all function block nodes to be associated with resources that perform corresponding service operations. For example, a specific collaborative robot may not have been purchased yet. To verify the implementability, a corresponding general function block node may be used for simulation in advance. When the implementability is determined, the purchase is started.

In this embodiment, each behavior tree node may be instantiated in response to the behavior tree construction operation, and connection relationships between instantiated behavior tree nodes may be established. Some or all of the instantiated function block nodes are associated with resources that perform corresponding service operations. By performing this step, an added function block node may be instantiated as an operation for a corresponding resource. Then, a behavior tree corresponding to a workflow is generated based on the connection relationships between the instantiated behavior tree nodes.

During specific implementation, the foregoing behavior tree nodes may be stored in the node library. In addition, for similar application scenarios, to avoid the waste of manpower, time, and the like in repeatedly constructing behavior trees, a behavior tree (an uninstantiated behavior tree framework) that is already constructed by the user and that is of a corresponding workflow or a corresponding sub workflow that has been debugged or successfully run is stored as a workflow node or a sub workflow node. Correspondingly, the node library may further include a workflow (WF, WorkFlow) node and a sub workflow (SWF, SubWorkFlow) node. When the user needs to construct a similar behavior tree or construct a behavior tree including the workflow or the sub workflow, the user may select a corresponding workflow node or sub workflow node and perform the necessary configuration on the workflow node or the sub workflow node to obtain the behavior tree for implementing the required workflow.

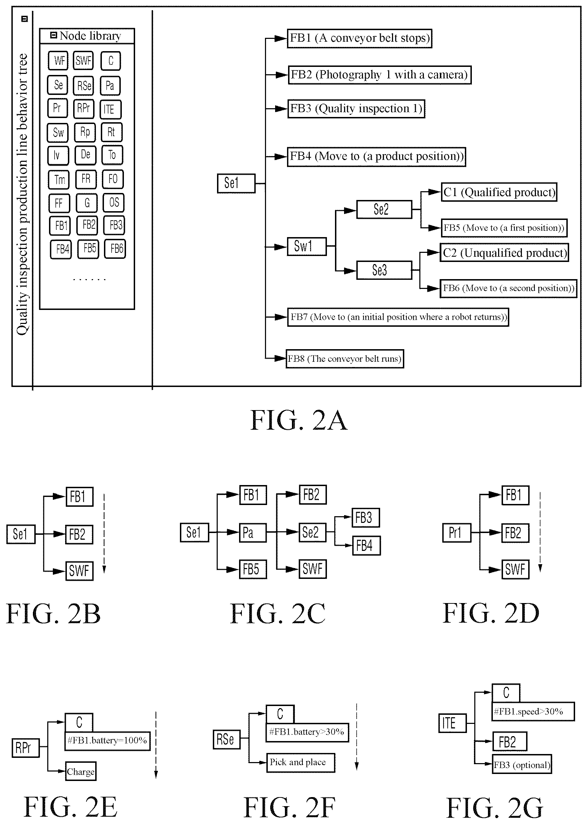

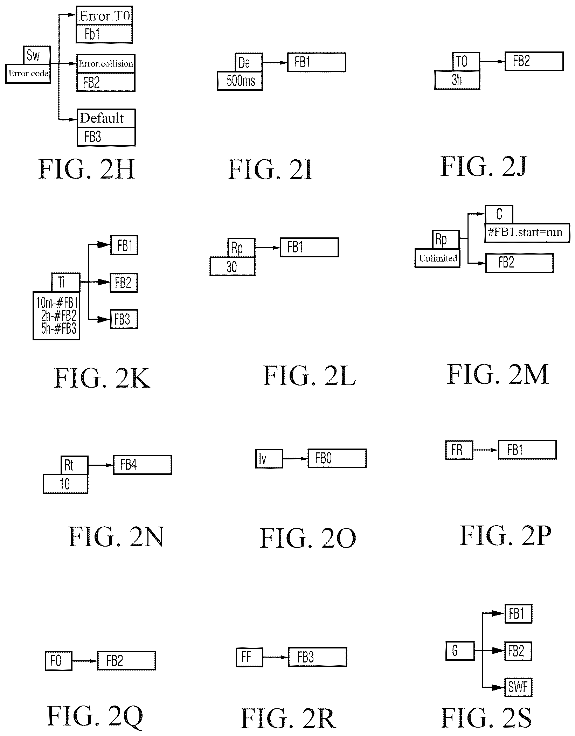

FIG. 2A is a schematic diagram of a behavior tree for constructing a quality inspection production line workcell in an example. FIG. 2B to FIG. 2S are respectively schematic diagrams of a partial behavior tree constructed in an example. A direction of an arrow indicates an execution sequence of corresponding nodes.

In the foregoing construction process of the behavior tree that represents the workflow, the function block nodes may be understood as being presented in the form of a label diagram, and construction of this behavior tree based on a function block label diagram requires the participation of the flow control node and the decorator node. In addition, embodiments of the present invention further provide a behavior tree construction method based on a function block typed diagram. In the method, a function block node is presented in the form of a typed diagram. In practical application, the two behavior tree construction methods can coexist, and when one method is used to construct a behavior tree, the other method is also used to synchronously construct the behavior tree. For example, when two function block nodes are connected in sequence based on the function block typed diagram, when a behavior tree based on the function block label diagram is synchronously constructed, a sequence node is automatically added, and the two function block nodes are added from top to bottom for the sequence node.

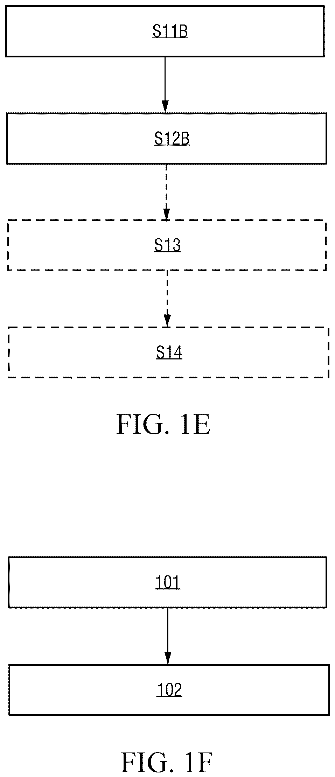

FIG. 1E is a schematic flowchart of another workflow implementation method according to an embodiment of this application. As shown in FIG. 1E, the method may include the following steps.

Step S11B: Receive addition and line connection operations of the function block nodes performed by a user based on the function block typed diagram on the graphical user interface. In this application, the typed diagram and the label diagram may be understood as two presentation manners of the same function block node, and functions of the typed diagram and the label diagram are both for implementing a corresponding service operation.

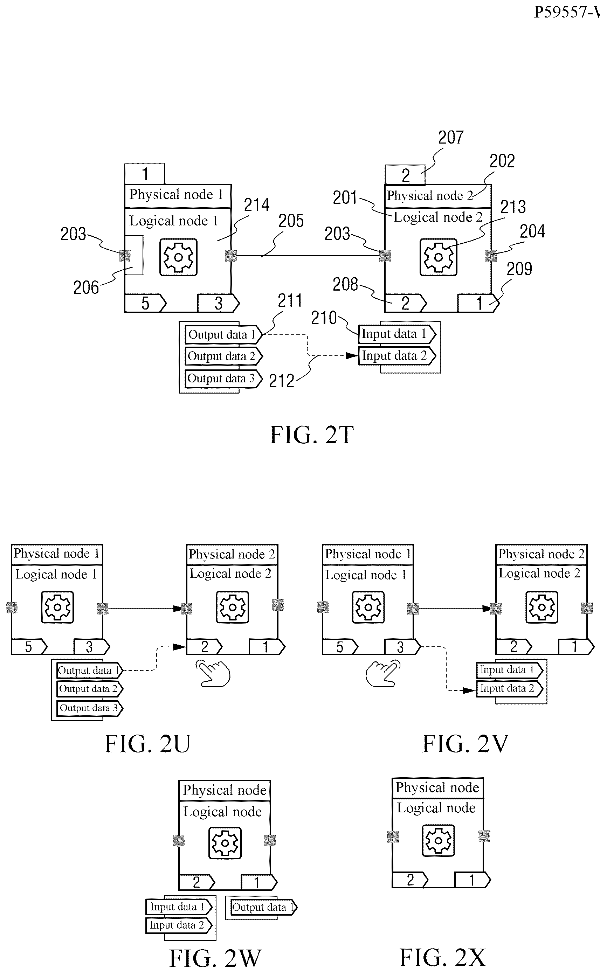

FIG. 2T shows an example of constructing a behavior tree based on function block nodes of a function block typed diagram in an example. In this example, two function block nodes FB1 and FB2 are shown. As shown in FIG. 2T, the function block typed diagram may include:
(1) A function block name 201, configured to indicate a type of service operation, for example, screw tightening, image collection, video recording, and vision guide. During specific implementation, when dragging a function block node from the node library to the canvas, a default function block name is to be generated by a default name defined by a function block plus an instance number. In FIG. 2U, using the logical nodes in the function block node as an example, names are represented by "logical node 1" and "logical node 2". The function block name is editable but should be unique within a current global workflow.
(2) A function block header 202, configured to indicate a resource that perform a service operation. For example, a resource that performs screw tightening is a torque wrench, a resource that performs image collection is a monitor, a resource that performs video recording is a monitor, and a resource that performs vision guide is a camera. Normally, the function block header 202 of the logical node is generally a physical resource, such as "physical node 1" and "physical node 2" as shown in FIG. 2U. As mentioned above, the resource indicated by the function block header 202 may be associated in advance, or association of a corresponding resource may be completed through resource configuration after adding the function block node. Furthermore, the resource indicated by the function block header 202 may alternatively be a dynamic resource.
(3) A link input port 203 and a link output port 204, for triggering link connections. In this embodiment, a line connection operation of the function block node may include a line connection operation between the link output port 204 and the link input port 203 between the two function block nodes FB1 and FB2. Through the line connection operation, a link connection 205 is established between the two function block nodes FB1 and FB2. The link connection 205 in this example is a one-way connection configured to indicate a workflow running process, for example, indicate an execution sequence of two function block nodes, that is, the left function block node FB1 is executed first and then the right function block node FB2 is executed.

During specific implementation, to avoid clicking errors and improve the sensitivity of a function block node connection, there is a sensitive region 206 within a setting range of the link input port 203, here referred to as a first sensitive region, to position a connection endpoint on the link input port 203 when a click and selection operation and a line connection operation performed by the user are received in the first sensitive region. Similarly, there may also be a sensitive region (not shown) within a setting range of the link output port 204, here referred to as a second sensitive region, to position a connection endpoint on the link output port 204 when a click and selection operation and a line connection operation performed by the user are received in the second sensitive region.

In addition, in this embodiment, in response to the line connection operation between the link output port 204 and the link input port 203 that are between the two function block nodes FB1 and FB2, an instruction label 207 configured to indicate the execution sequence of each function block node is further generated for the mutually connected function block nodes FB1 and FB2, and the instruction label 207 is marked on the function block typed diagram of the function block nodes FB1 and FB2, for example 1 and 2 as shown in the figure. In addition, the instruction label 205 may be further used as an index for jump instructions and used as a chapter index of readme text.

(4) An input data set block 208, configured to represent a set of all data input ports; and an output data set block 209, configured to represent a set of all data output ports. In this embodiment, a quantity of data input ports of the function block node may be marked on the input data set block 208, such as 5 on the input data set block 208 of the function block node FBI and 2 on the input data set block 208 of the function block node FB2. If the quantity of data input ports is zero, then the input data set block 208 may be hidden. Similarly, a quantity of data output ports of the function block node may be marked on the output data set block 209, such as 3 on the output data set block 209 of the function block node FB1 and 1 on the output data set block 209 of the function block node FB2. If the quantity of data output ports is zero, the output data set block 209 may be hidden.

In this embodiment, as shown in FIG. 2U to FIG. 2X, each data input port of the function block node may be expanded or hidden by clicking on the input data set block 208. Each data output port of the function block node may be expanded or hidden by clicking on the output data set block 209. FIG.2U is a schematic diagram of hiding a data input port of logical node 2 by clicking. FIG.2V is a schematic diagram of hiding a data output port of logical node 1 by clicking. FIG. 2W is a schematic diagram of displaying each data input port and each data output port simultaneously. FIG. 2X is a schematic diagram of hiding each data input port and each data output port simultaneously.

(5) A data input port 210 and a data output port 211, configured to trigger data transmission. In this embodiment, a line connection operation of the function block node may further include a line connection operation between the data output port 211 and the data input port 210 between corresponding data of the two function block nodes FB1 and FB2. Through this line connection operation, a data connection 212 is established between the two function block nodes FB1 and FB2. The data connection 212 in this example is configured to indicate data transmission between the two function block nodes FB1 and FB2. As shown in FIG. 2U, that the data connection 212 is established between the data output port 211 of output data 1 of the function block node FB1 and the data input port 210 of input data 2 of the function block node FB2 represents that the output data 1 of the function block node FB1 is used as the input data 2 of the function block node FB2.

In specific implementation, similar to the link input/output port, to avoid click errors and improve the sensitivity of a function block node connection, there may also be a sensitive region within a setting range of the data input port 210 (not shown), here referred to as a third sensitive region, to position a connection endpoint on the data input port 210 when a click and selection operation and a line connection operation performed by the user are received in the third sensitive region. Similarly, there may also be a sensitive region (not shown) within a setting range of the data output port 211, here referred to as a fourth sensitive region, to position a connection endpoint on the data output port 211 when a click and selection operation and a line connection operation performed by the user are received in the fourth sensitive region.

(6) A function block icon 213. Specifically, the function block icon 213 may be a vector icon 213, configured to visually represent service operations of the function block node. Certainly, in other implementations, the function block icon 213 may alternatively be omitted.

(7) A function block main body 214, configured to carry the foregoing components. In this embodiment, an addition operation of the function block node may include a drag operation on the function block main body 214.

Step S12B: In response to an addition and line connection operation of the function block node, construct a behavior tree corresponding to a workflow representing service operations to be performed by each resource in a workcell.

In this step, in response to the addition and line connection operation of the function block node, the behavior tree in S12A including the flow control node and the function block node based on the function block label diagram may be synchronously constructed. Similarly, when the behavior tree including the flow control node and the function block node based on the function block label diagram is constructed in step S12A, the behavior tree based on the function block typed diagram in S12B may also be synchronously constructed. In addition, these two behavior tree construction interfaces may be switched according to user's choice. For example, the behavior tree based on the function block typed diagram or the behavior tree based on the function block label diagram may be switched and displayed based on user's click and selection operation on the behavior tree based on the function block typed diagram or the behavior tree based on the function block label diagram.

Further, in other implementations, whether the behavior tree is created based on the function block node in the form of the label diagram or based on the function block node in the form of the typed diagram, each of the at least one function block node in the behavior tree may be further added and connected to at least one data block. Each data block is configured to present corresponding data in a service operation of the function block node to which the data block is connected. Types of data blocks may include some or all of data pairs, data tables, images, videos, charts, and the like.

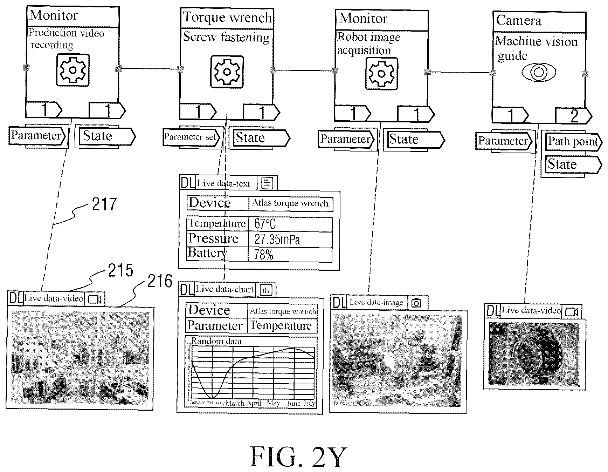

FIG. 2Y is a schematic diagram of an example of this application in which data blocks are added to four function block nodes in a behavior tree and corresponding data is displayed in each data block. In this example, the behavior tree creation interface based on the function block typed diagram is used as an example. As shown in FIG. 2Y, in this example, a data block with a type of live data-video (Live Data-Video) is added to a function block node, associated with a monitor, for production video recording. A data block with a type of live data-text (Live Data-Text) and a data block with a type of live data-chart (LiveData-Chart) are added to a function block node, associated with the torque wrench, for screw tightening. A data block with a type of live data-image (Live Data-Image) is added to a function block node, associated with the monitor, for robot image collection. A data block with a type of live data-video (Live Data-Video) is added to a function block node, associated with the camera, for machine vision guide.

As shown in FIG. 2Y, each data block may include a data block label 215 indicating a type of the data block and a data block body 216 having a display region for presenting specific data. The data block label 215 may be a draggable label, for example, may be moved to any position in the canvas. A size of the display region of the data block body 216 is adjustable, and the data block body 216 is configured to display different types of data from a data layer in real time. A monitoring link 217 is established between each data block and the corresponding function block node, and one function block may be mapped to a plurality of data blocks. When the workflow is executed, for example, is executed in runtime, the monitoring and output data corresponding to the function block node is to be transmitted to a corresponding data block for real-time display.

The data block in this embodiment is a low-code data block and differs from other SCADA and dashboard systems in that the low-code data block in this embodiment is also a low-code element and can be used as a part of the behavior tree, and all attributes of the low-code data block may be managed in low-code logic.

The data source in the low-code data block comes from the data layer and may acquire data through an interface provided by the data layer at runtime or in a cloud execution engine. The data source may be a time series database, an RDBMS, or a NoSQL. The low-code data block is a flexible, scalable, and adaptable system and is applicable to any function block node that may be associated with a physical device. In short, the data block configured to implement data monitoring may be considered as a visual interface of the data layer.

Further, in other implementations, whether the behavior tree is created based on the function block node in the form of the label diagram or based on the function block node in the form of the typed diagram, each of the at least one function block node in the behavior tree may be further added and connected to at least one data block. Each data block is configured to present corresponding data in a service operation of the function block node to which the data block is connected. Types of data blocks may include some or all of data pairs, data tables, images, videos, charts, and the like.

FIG. 2Y is a schematic diagram of an example of this application in which data blocks are added to four function block nodes in a behavior tree and corresponding data is displayed in each data block. In this example, the behavior tree creation interface based on the function block typed diagram is used as an example. As shown in FIG. 2Y, in this example, a data block with a type of live data-video (Live Data-Video) is added to a function block node, associated with a monitor, for production video recording. A data block with a type of live data-text (Live Data-Text) and a data block with a type of live data-chart (LiveData-Chart) are added to a function block node, associated with the torque wrench, for screw tightening. A data block with a type of live data-image (Live Data-Image) is added to a function block node, associated with the monitor, for robot image collection. A data block with a type of live data-video (Live Data-Video) is added to a function block node, associated with the camera, for machine vision guide.

As shown in FIG. 2Y, each data block may include a data block label 215 indicating a type of the data block and a data block body 216 having a display region for presenting specific data. The data block label 215 may be a draggable label, for example, may be moved to any position in the canvas. A size of the display region of the data block body 216 is adjustable, and the data block body 216 is configured to display different types of data from a data layer in real time. A monitoring link 217 is established between each data block and the corresponding function block node, and one function block may be mapped to a plurality of data blocks. When the workflow is executed, for example, is executed in runtime, the monitoring and output data corresponding to the function block node is to be transmitted to a corresponding data block for real-time display.

The data block in this embodiment is a low-code data block and differs from other SCADA and dashboard systems in that the low-code data block in this embodiment is also a low-code element and can be used as a part of the behavior tree, and all attributes of the low-code data block may be managed in low-code logic.

The data source in the low-code data block comes from the data layer and may acquire data through an interface provided by the data layer at runtime or in a cloud execution engine. The data source may be a time series database, an RDBMS, or a NoSQL. The low-code data block is a flexible, scalable, and adaptable system and is applicable to any function block node that may be associated with a physical device. In short, the data block configured to implement data monitoring may be considered as a visual interface of the data layer.

In addition, in this embodiment, the following step S13 and step S14 may be further included on the basis of FIG. 1A and FIG. 1B.

Step S13: Analyze the behavior tree including each function block node and connection relationships between the function block nodes to obtain a workflow representing service operations to be performed by resources in a workcell. The resources here may include a dynamic resource.

In this step, during specific implementation, there may be a plurality of implementation forms. For example, after the behavior tree constructed in FIG. 1A and FIG. 1E is parsed, a workflow in a markup (Markup) language such as an XML (extensible markup language) format may be obtained. Alternatively, a compiler may be used to compile the behavior tree constructed in FIG. 1A and FIG. 1E into a behavior tree logic workflow.

Step S14: Deploy the workflow to runtime of the corresponding workcell, so that the runtime executes the workflow to control resources in the workcell to perform the service operations based on the workflow. The runtime stores and manages implementation parts of each function block node. If resources associated with the function block node include a dynamic resource, in this step, the runtime may also determine a resource instance of the dynamic resource based on on-site resource data, for example, determine, based on a dynamic resource flow of the dynamic resource, the resource instance of the dynamic resource based on the on-site resource data. Then, the runtime may control resources including the resource instance to perform the operations based on the workflow.

In specific implementation, this step may be implemented in various forms. For example, for the markup language-format workflow obtained in step S13, in this step, the markup language-format workflow may be provided for the runtime of the corresponding workcell, and the runtime converts the markup language-format workflow into a node link assembly-format workflow, and selects, by executing the node link assembly-format workflow, an appropriate execution engine for each function block node involved in the workflow to schedule corresponding resources to perform corresponding service operations.

For another example, for the workflow represented by the behavior tree logic obtained in step S13, in this step, the behavior tree logic workflow may be provided for the runtime of the corresponding workcell, and the runtime constructs the behavior tree logic workflow as a binary executable file, and schedules, by executing the binary executable file, the corresponding resources to perform corresponding service operations.

In addition, the runtime may further debug and monitor an execution status when using the execution engine to schedule corresponding resources to perform corresponding service operations. In addition, the runtime may also integrate skills of an open source community into the runtime and support open source communities of various language types, such as C/C++, C#, Java, and other forty or fifty languages.

In one example, the runtime may be deployed to a single board computer or an industrial personal computer for execution.

The runtime 30 in this embodiment is an interpreter-driven runtime system used for executing the workflow and managing necessary related processes. An ecosystem is easy to establish based on an interpreter with a good open source community, for example, based on Python and Google V8 interpreters, and may be easily extended to use another interpreter.

For a behavior tree connected to a data block, the runtime may further provide, for the corresponding data block, corresponding data acquired during the execution of the service operations for display. During specific implementation, the runtime may directly provide, for the corresponding data block, the corresponding data acquired during the execution of the service operations for display or provide, for the corresponding data block, the data through a third-party device for display.

In this embodiment, the runtime may use a standard field bus and a device protocol to access a field bus and a device in advance. During specific implementation, the workcell may have a main controller, and at this time, the runtime may be located on the main controller of the workcell. A device resource in the resource may be connected to the main controller. The main controller controls a device resource connected to the main controller to perform corresponding operations based on a workflow of the runtime. A human resource and the like in the resource may directly prompt about performing corresponding operations based on the workflow of the runtime.

In this embodiment, by setting the dynamic resource, a function of supporting a dynamic workflow and resource sharing is provided for the runtime. A dynamic workflow implementation method in this embodiment may be as shown in FIG. 1F and includes the following steps.

Step 101: Construct a behavior tree including a plurality of function block nodes and connection relationships between the function block nodes. At least one of the plurality of function block nodes is bound to a dynamic resource, and the dynamic resource is a placeholder for reference to a plurality of resource instances of a same type.

This step 101 may include step S11A and step S12A in FIG. 1A or include step SUB and step S12B in FIG. 1E.

Step 102: Analyze the behavior tree to obtain a workflow representing service operations to be performed by resources including the dynamic resource in one workcell, and deploy the workflow to runtime of the corresponding workcell, so that the runtime determines a resource instance of the dynamic resource based on on-site resource data, and controls resources including the resource instance to perform the operations based on the workflow.

Step 102 may include step S13 and step S14 in FIG. 1A and FIG. 1E.

In addition, according to Gartner's definition, an OT domain usually refers to operational technology (Operational Technology, OT), and integrates hardware and software to detect or trigger changes in processes or occurred events in the enterprise by directly monitoring and/or controlling a physical device (referred to as an OT device). OT uses a computer to monitor or change physical statuses of an industrial control system (Industrial Control System, ICS) and another system. The industrial control system is a computer-based facility, a system, or a device for remotely monitoring and/or controlling key industrial processes to implement physical functions. The term "OT" is used to distinguish the industrial control system from a conventional information technology (Information Technology, IT) system in terms of technical implementation and functionality.

Currently, there are many IT low-code development tools or platforms on the market. Some tools are for an Internet of Things usage scenario and are intended for experienced IT engineers, while OT engineers and junior IT engineers have difficulty understanding paradigm of the tools. However, some tools are more suitable for low-code development usage scenarios in an IT domain, but are not well suited to an OT domain.

The foregoing workflow implementation method in this embodiment may be applied to the OT domain to be used as an OT-domain low-code development method. Specifically, the workflow implementation method shown in FIG. 1A and FIG. 1E may be implemented in the OT domain, such as an OT-domain low-code development platform. Correspondingly, the workflow may be an OT-domain workflow. The workcell may be a workcell in the OT domain. The resources may be OT resources. The OT resources may include but are not limited to an Internet of Things (Internet of Things, loT) device, a programmable logic controller (Programmable Logic Controller, PLC), a robot (Robotics), manual process (Manual Process), an industrial personal computer (Industrial Personal Computer, IPC), and the like.

In addition, in embodiments of this application, it is considered that the fusion of IT domain and OT domain is becoming increasingly important in the process of enterprise digital transformation. To fuse the IT domain and the OT domain into an ITOT system, an urgent problem that needs to be resolved is how enterprises collect OT domain data and control the OT domain process in a way that is easy to understand rather than IT-domain programming.

The workflow construction and execution method in this embodiment may be used in this ITOT system to be used as an OT-domain low-code development method that may be fused with the IT domain. Similarly, the workflow implementation method shown in FIG. 1A and FIG. 1E may be implemented in the OT domain, such as an OT-domain low-code development platform. Correspondingly, the workflow may be an OT-domain workflow. The workcell may be a workcell in the OT domain. The resources may be OT domain resources.

In addition, to fuse the IT domain and the OT domain, based on the workflow implementation method shown in FIG. 1A and FIG. 1D, the method may further include: generating a microservice based on the behavior tree, to enable an IT device to trigger, by calling the microservice, runtime of a main controller of the workcell to execute the OT-domain workflow. During specific implementation, the IT device may directly call or call the microservice through a knowledge platform. Correspondingly, in this embodiment, the runtime may have a microservice interface for communicating with a microservice corresponding to the behavior tree, to enable an IT device, when calling the microservice, to trigger the runtime to execute the OT-domain workflow. In addition, the runtime may provide, for the corresponding data block, corresponding data acquired during the execution of service operations through the microservice for display. Alternatively, the runtime may provide, for the knowledge platform, the corresponding data acquired during the execution of service operations. After the knowledge platform perform processing including filtering on the data, the data may be provided directly or provided for the corresponding data block through the microservice for display.

When the microservice is generated based on the behavior tree, an APE of the microservice may be generated based on the behavior tree. The processing in the API includes each service operation in the OT-domain workflow. Input parameters of the API are parameters acquired by an input port of the OT-domain workflow, and output parameters of the API are parameters output by an output port of the OT-domain workflow.

To enable the IT domain to call the microservice, the IT domain needs to be capable of acquiring information of the microservice. Specific implementations include but are not limited to the following two implementations.

### Manner 1

In manner 1, code developers in the OT domain may notify code developers in the IT domain of names and IP addresses of each generated microservice. In this way, the code developers in the IT domain may directly write information of the microservice into code during the development process, so that the microservice can be called by the IT device. Manner 1 is more suitable for scenarios with a small quantity of microservices.

### Manner 2

In manner 2, registration and discovery mechanisms may be used. Each microservice is registered on the knowledge platform, to enable an IT-domain code development tool to allow an IT device to discover a connected microservice through the knowledge platform. During specific implementation, the IT-domain code development tool may be used to enable an IT domain device to discover, through code development, the connected microservice through the knowledge platform. An apparatus that completes registration of the microservice may be an OT-domain microservice generator or a third-party apparatus. The third-party apparatus may be regarded as a part of the OT-domain low-code development platform, or implemented in the knowledge platform. Manner 2 is more suitable for scenarios with a large quantity of microservices.

In this embodiment, the IT device may include but is not limited to a manufacturing operation management (Manufacturing Operation Management, MOM) system, a manufacturing execution system (manufacturing execution system, MES), an enterprise resource planning (Enterprise Resource Planning, ERP) system, an enterprise service bus (Enterprise Service Bus, ERP), a product lifecycle management (Product Lifecycle Management, PLM) system, and the like.

In this embodiment, because the IT-domain code development tool may be programmed to enable the IT device to call the microservice through the knowledge platform, the runtime of the main controller of the workcell is triggered to execute the OT-domain workflow, so that an IT-domain code development platform can control an OT domain process, and the fusion of the IT domain and the OT domain is implemented. The microservice is automatically generated by the OT-domain microservice generator based on the behavior tree in the OT domain. There is no need for the IT-domain code development tool to understand the details of the OT-domain workflow, and the IT-domain code development tool only needs to acquire an identifier (for example, a name) and an IP address of the microservice. Developers in the IT domain do not need to understand the OT-domain device and control processes, facilitating implementation and understanding.

Fields to which embodiments of this application are applicable include but are not limited to industrial automation (Industrial Automation), a logistics (Logistics), laboratory (Laboratory), maritime (Maritime), smart grid (Smart Grid), electric vehicle infrastructure (Electric Vehicle Infrastructure), electric vehicle (Electric Vehicle), building automation (Building Automation), smart city (Smart City), water treatment (Water Treatment), garbage recycling (Garbage Recycling), smart farm (SmartFarm), and the like.

The workflow implementation method in embodiments of this application has been described in detail above, and a workflow implementation system in embodiments of this application is described in detail below. The workflow implementation system in embodiments of this application may be configured to implement the workflow implementation method in embodiments of this application. For details not disclosed in the system embodiment of the present invention, refer to the corresponding description in the method embodiment of the present invention. Details are not described herein again.

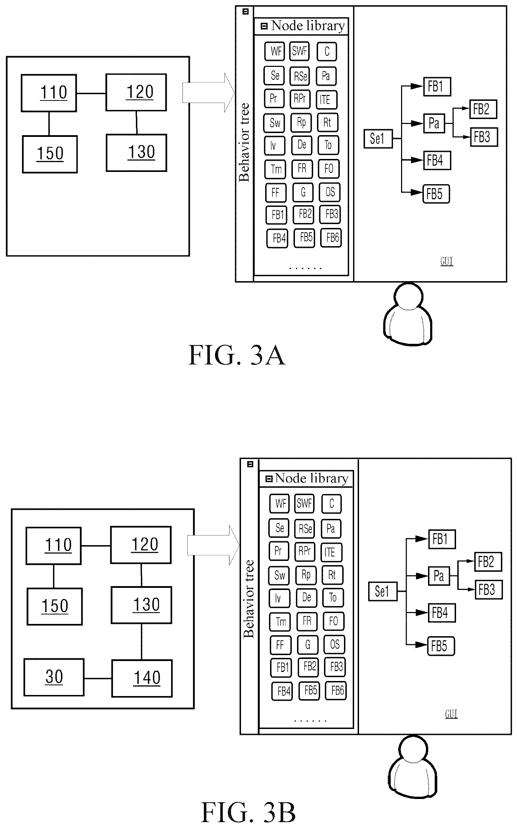

FIG. 3A is a schematic diagram of a structure of a workflow implementation system according to an embodiment of this application. As shown in FIG. 3A, the system may include a node library 110, a graphical interface module 120, and an editing processing module 130.

The node library 110 is provided with behavior tree nodes for constructing a behavior tree. The behavior tree nodes may include a flow control node and a function block node. One behavior tree is configured to represent one workflow. The workflow defines an operation to be performed by one workcell. The flow control node is configured to implement logical control in the workflow. The function block node is configured to implement service operations in the workflow. The function block node may include logical nodes. Each logical node corresponds to an operation template. Each operation template predefines at least one type of a resource such as an operation that a device can perform. The operation include an action, a method, or a skill. In addition, the node library 110 may further include data blocks of various types, and each data block is configured to present corresponding data in a service operation of a function block node to which the data block is connected. Types of data blocks include some or all of data types such as data pairs, data tables, images, videos, and charts.

In an implementation, the resource is represented in the form of a resource node, and all resource nodes are associated and stored in the form of a resource knowledge graph. The resource knowledge graph includes each resource node and connection lines representing relationships between the resource nodes. Correspondingly, as shown in the figure, this embodiment may further include a resource library 150, configured to store various resources in the form of the resource knowledge graph. Each resource can perform at least one service operation. The resources here may include a dynamic resource.

In an implementation, the flow control node may include some or all of a main control node, a logical control node, and a condition node. The main control node may include some or all of a start node, an end node, a goto node, an anchor node, a stop node, and an abort node. The logical control node may include some or all of a sequence node, a reactive sequence node, a parallel node, an in-process quality control node, a priority node, a reactive priority node, an if-then-else node, and a switch node.

In an implementation, the function block node may further include some or all of a manual node, a dynamic node, a delay node, and an empty node.

In an implementation, the behavior tree nodes further include a decorator node. The decorator node may include some or all of a repeat node, a retry node, a one-shot node, a timeout node, a timer node, an inverter node, a force run node, a force OK node, a force failed node, and a guard node.

In an implementation, some or all of the function block nodes in the node library 110 are respectively bound with resources for executing service operations corresponding to the function block nodes. The resources here may include a dynamic resource.

In addition, in another implementation, the function block nodes in the node library 110 can be presented in the form of the label diagram as shown in FIG. 2A to FIG. 2T or in the form of the typed diagram as shown in FIG. 2T to FIG. 2X. Certainly, in other implementations, the function block nodes in the node library 110 may alternatively be presented only in the form of the typed diagram. A specific structure of the function block nodes in the form of a function block typed diagram may be shown in FIG. 2T. Details are not described herein.

The graphical interface module 120 is configured to provide a graphical user interface GUI allowing a user to construct the behavior tree based on the behavior tree nodes in the node library 110. In addition, data block addition and connection operations may also be performed on the graphical user interface GUI.

During specific implementation, the graphical user interface may include: a first graphical user interface of a behavior tree constructed based on the flow control node as well as the function block node in the form of the function block label diagram; and a second graphical user interface of a behavior tree constructed based on the function block node in the form of the function block typed diagram. The two graphical user interfaces may be switched and displayed based on the user's selection. A behavior tree construction operation may include an addition and line connection operation on the function block node. On the second graphical user interface, the addition operation on the function block node may include a drag operation on the function block main body. The line connection operation on the function block node may include a line connection operation between a link output port and a link input port between two function block nodes as well as a line connection operation between a data output port and a data input port between corresponding data of the two function block nodes.

The behavior tree nodes may be listed on the graphical user interface GUI in the form of an icon.

The editing processing module 130 is configured to generate a behavior tree corresponding to a workflow in response to the behavior tree construction operation. In addition, the editing processing module 130 is further configured to add and connect at least one data block for each of at least one function block node in the behavior tree in response to the addition and connection operation of the data block.

During specific implementation, in an implementation, the editing processing module 130 may, in response to the behavior tree construction operation, instantiate each behavior tree node; establish connection relationships between instantiated behavior tree nodes; and generate a behavior tree corresponding to a workflow based on the connection relationships between the instantiated behavior tree nodes. Some or all of the instantiated function block nodes are associated with resources that perform corresponding service operations. For example, through the operation, the logical node is instantiated as an operation of a corresponding resource (such as a device).

In this embodiment, the behavior tree nodes and the data blocks may be listed on the graphical user interface in the form of the icon. The user determines nodes required to create the workflow by selecting and dragging the icon to add to a canvas. Further, necessary parameter configuration may also be performed on the nodes, such as resource configuration and/or input and output parameter configuration.

If a workcell needs to perform two or more service operations, that is, there are two or more service operations defined in the required workflow, the behavior tree corresponding to the workflow may include a plurality of logical nodes. An execution sequence of the logical nodes is determined based on the order and mutual relationship of the operations. The behavior tree corresponding to the workflow is finally generated by arranging and connecting the dragged nodes accordingly.

In one implementation, the behavior tree construction operation may further include operations to associate resources for added function block nodes.

Corresponding to the methods shown in FIG. 1A and FIG. 1E, the workflow implementation system in this embodiment of the present invention may be shown in FIG. 3B, and based on the workflow implementation system shown in FIG. 3A, the system may further include an analysis and deployment module 140 and runtime 30. The analysis and deployment module 140 may be configured to: analyze the behavior tree to obtain a workflow representing service operations to be performed by resources in one workcell; and deploy the workflow to the runtime 30 of the corresponding workcell, so that the resources in the workcell performs the service operations based on the workflow. If at least one function block node in the workflow is bound to a dynamic resource, the runtime 30 may further determine a resource instance of the dynamic resource based on on-site resource data, for example, determine, based on a dynamic resource flow of the dynamic resource, the resource instance of the dynamic resource based on the on-site resource data. Then, the runtime 30 may control resources including the resource instance to perform the operations based on the workflow.

During specific implementation, the runtime 30 may receive the workflow representing the service operations to be performed by the resources in one workcell, convert the workflow into an executable format file, and schedule, by executing the executable format file, the corresponding resources to perform the corresponding service operations.

If the workflow is a markup language-format workflow, the runtime 30 is configured to convert the markup language-format workflow into a node link assembly-format workflow, and select, by executing the node link assembly-format workflow, an appropriate execution engine for each function block node involved in the workflow to schedule corresponding resources to perform corresponding service operations. If the workflow is a behavior tree logic workflow, the runtime 30 is configured to construct the behavior tree logic workflow as a binary executable file, and schedule, by executing the binary executable file, the corresponding resources to perform corresponding service operations.

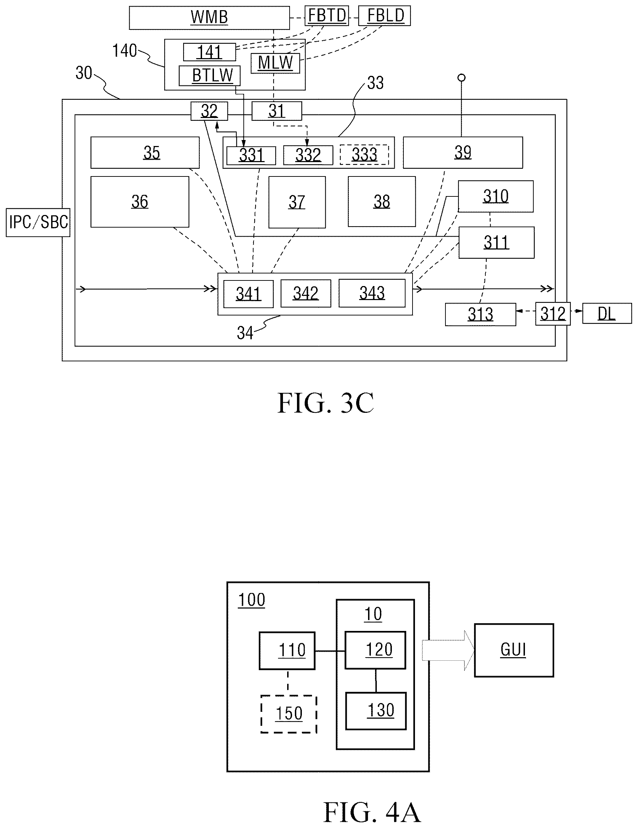

FIG. 3C is a schematic diagram of a structure of a workflow implementation system according to an example of this embodiment. As shown in FIG. 3C, the system includes a behavior tree construction module, an analysis and deployment module 140, and runtime 30.

The behavior tree construction module may be a low-code development platform (Low-code Engineering Platform Workcell Microservices Builder, WMB) and is configured to construct a behavior tree including a plurality of function block nodes and connection relationships between the function block nodes. The behavior tree may be a behavior tree based on a function block typed diagram (FBTD), and may alternatively be a behavior tree based on a function block label diagram (FBLD). At least one of the plurality of function block nodes may be bound to a dynamic resource.

The analysis and deployment module 140 is configured to analyze the behavior tree to obtain a workflow representing service operations to be performed by resources in one workcell, and deploy the workflow to runtime 30 of the corresponding workcell, so that the resources in the workcell performs the service operations based on the workflow. Each resource may include a dynamic resource. At this time, the runtime 30 may determine a resource instance of the dynamic resource based on on-site resource data (for example, determine the resource instance of the dynamic resource based on a dynamic resource flow of the dynamic resource), and control resources including the resource instance to perform the operations based on the workflow. In specific implementation, there may be two implementations. One is to obtain a markup language-format workflow (MLW). The other is to use a compiler 141 to generate a behavior tree logic workflow (BTLW).

The runtime 30 is configured to receive the workflow representing the service operations to be performed by the resources in one workcell, convert the workflow into an executable format file, and schedule, by executing the executable format file, the corresponding resources to perform the corresponding service operations.

In this example, the runtime 30 may include a format conversion module 31, a code actuator 32, a scheduler 33, an execution engine module 34, a debugging module 35, an openness interface 36, a community-driven openness 37, a text-driven element 38, a microservice interface 39, a function block node management module 310, function block node aggregation 311, a general API interface 312, and a data monitoring module 313.

The format conversion module 31 is configured to convert the markup language-format workflow into a node link assembly (NLA)-format workflow.

The scheduler 33 includes a constructor 331 and an NLA actuator 332. In addition, the scheduler 33 may further include a dynamic resource injector 333, configured to inject a new resource instance into the dynamic resource. For the dynamic resource, the scheduler may determine a resource instance of the dynamic resource based on on-site resource data (for example, determine the resource instance of the dynamic resource based on a dynamic resource flow of the dynamic resource).

The NLA actuator 332 is configured to execute the node link assembly-format workflow, and provide each function block node involved in the workflow to the execution engine module 34. For the dynamic resource, the NLA actuator 332 may determine a resource instance of the dynamic resource based on on-site resource data (for example, determine the resource instance of the dynamic resource based on a dynamic resource flow of the dynamic resource).

The constructor 331 is configured to construct a behavior tree logic workflow as a binary executable file. For the dynamic resource, the constructor 331 may determine a resource instance of the dynamic resource based on on-site resource data (for example, determine the resource instance of the dynamic resource based on a dynamic resource flow of the dynamic resource).

The code actuator 32 is configured to schedule, by executing the binary executable file, corresponding resources to perform corresponding service operations.

The execution engine module 34 is configured to select an appropriate execution engine for each function block node to schedule corresponding resources to perform corresponding service operations. For example, the execution engine module 34 may select an interpreter 341, a compiler 342, or another interpreter adapter 343 for each function block node according to user settings to schedule corresponding resources to perform corresponding service operations.

The interpreter 341 has the characteristics of slow execution speed but good traceability and debuggability. In this embodiment, a default interpreter may be Google V8 and Python.

The compiler 342 has the opposite characteristics to the interpreter 341 and has the characteristics of fast execution speed but poor traceability and debuggability. In this embodiment, the compiler 342 may be a just-in-time (JIT) compiler.

The another interpreter adapter 343 is for selection when the interpreter 341 and compiler 342 cannot be used. Certainly, in some applications, another interpreter adapters 343 may alternatively be omitted.

It may be seen that corresponding to the two implementations of the analysis and deployment module 140, the runtime 30 may also have two implementations. One is that the format conversion module 31 converts the markup language-format workflow into a node link assembly (NLA) format workflow. Then, the NLA actuator 332 in the scheduler 33 executes the node link assembly-format workflow, and provides each function block node involved in the workflow to the execution engine module 34. The execution engine module 34 selects an appropriate execution engine to schedule corresponding resources to perform corresponding service operations. For example, the execution engine module 34 may select an interpreter 341, a compiler 342, or another interpreter adapter 343 for each function block node according to user settings to schedule corresponding resources to perform corresponding service operations. During specific implementation, the execution engine module 34 may read the implementation part of the corresponding function block node from the function block node aggregation 311. The function block node aggregation 311 stores the implementation part of each function block node. The function block management module 310 is configured to manage and schedule the function block nodes in the function block node aggregation 311. Another implementation of the runtime 30 is: for the behavior tree logic workflow, the constructor 331 in the scheduler 33 constructs the behavior tree logic workflow as a binary executable file, and the code actuator 32 schedules, by executing the binary executable file, corresponding resources to perform corresponding service operations.

During specific implementation, either the implementation combination including the format conversion module 31, the NLA actuator 332, and the execution engine module 34 or the implementation combination including the constructor 331 and the code actuator 32 may be selected. In other words, in some implementations, the runtime 30 may only include any combination thereof, but does not need to include all of them.

The debugging module 35 is configured to debug the workflow before executing the workflow and monitor data during the debugging process.

The openness interface 36 uses a standard field bus and a device protocol to access a field bus and a device.

The community-driven openness 37 can integrate skills of an open source community into the runtime 30. In view of this, the WMB may easily implement function blocks with different functions and support forty or fifty languages, such as C/C++ language, C# language, and Java language.

The text-driven element 38 may use markup text to describe all function blocks and other exchange data that represent runtime. In WMB runtime, the text-driven element uses a common runtime engineering exchange model (Common Runtime Engineering Exchange Model, CREEM) format and support meta tracking, version control, and DevOps.

The microservice interface 39 is configured to trigger the runtime 30 to execute the workflow when a microservice corresponding to the workflow (that is, a microservice corresponding to the behavior tree) is called.

The function block node management module 310 is configured to manage and call the implementation part of the function block node in the function block node aggregation 311.

The function block node aggregation 311 stores the implementation part of each function block node. For a logical block in function blocks, a hardware abstraction layer (HAL) may be provided to perform hardware abstraction on logical nodes and hide hardware interface details of a specific platform.

The data monitoring module 313 is configured to acquire, through the general API interface 312, when the implementation part of each function block node is executed, data collected by a field data layer (DL), and monitor the data. Further, the data is provided for a corresponding data block for display, and hardware operating data is provided for the field data layer.

Specifically, the workcell may have a main controller. At this time, the runtime may be located on the main controller of the workcell. Correspondingly, a device resource in the resource may be connected to the main controller. The main controller controls a device resource connected to the main controller to perform corresponding operations based on a workflow of the runtime. A human resource and the like in the resource may directly prompt about performing corresponding operations based on the workflow of the runtime.

FIG. 4A shows an OT-domain low-code development platform 100 in an embodiment of this application. The platform 100 may be used to implement the workflow implementation system shown in FIG. 3.

As mentioned before, there is currently no low-code development tool and platform suitable for the OT domain. In the platform 100 shown in FIG. 4A, operation templates for various types of OT devices to perform operations are predefined (which may be regarded as providing the capabilities of the OT domain), corresponding logical nodes are constructed based on the operation templates, and other behavior tree nodes are also provided to construct an OT-domain workflow. Therefore, a behavior tree corresponding to the OT-domain workflow may be easily and quickly created, implementing low-code development suitable for the OT domain. Development engineers do not need to have an in-depth understanding of various types of OT devices to implement OT domain development.

Specifically, as shown in FIG. 4A, an OT-domain low code development platform 100 may include:
an OT-domain low-code development tool 10. The OT-domain low-code development tool 10 may be configured to implement the graphical interface module 120 and the editing processing module 130 in the workflow implementation system shown in FIG. 3, and further, may implement the analysis and deployment module 140 in the workflow implementation system shown in FIG. 3. The node library 110 and the resource library 150 in the workflow implementation system shown in FIG. 3 may be stored in a memory.

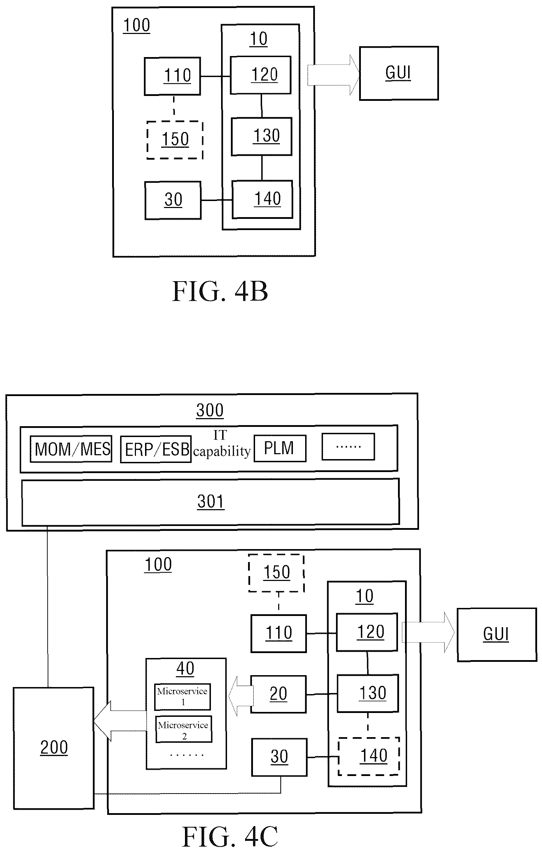

Further, as shown in FIG. 4B, the OT-domain low-code development platform 100 may further include the runtime 30 of the foregoing workcell. The OT-domain low-code development tool 10 may deploy an OT-domain workflow corresponding to a generated behavior tree to the runtime 30 of the corresponding workcell, so that the runtime 30 executes the workflow to control OT resources, such as an OT device, in the workcell to perform operations based on the OT-domain workflow.

The composition of the OT-domain low-code development platform 100 shown in FIG. 4A and FIG. 4B only involves the OT domain. However, the fusion of IT domain and OT domain has become increasingly important for enterprise digital transformation. What needs to be implemented is how enterprises can control the processes of the OT domain in an easy-to-understand and non-IT programming way. The OT-domain low-code development platform 100 shown in FIG. 4C resolves how to control the OT domain process through an IT-domain code development platform 300. As shown in FIG. 4C, based on the structure shown in FIG. 4B, the OT-domain low-code development platform 100 may further include an OT-domain microservice generator 20. The OT-domain microservice generator 20 may generate a microservice 40 based on an OT-domain behavior tree. In this way, an IT-domain code development tool 301 may be programmed to enable the IT device to call the microservice 40 through a knowledge platform 200, the runtime 30 of the main controller of the workcell is triggered to execute the OT-domain workflow, so that an IT-domain code development platform 300 can control an OT domain process, and the fusion of the IT domain and the OT domain is implemented. The microservice 40 is automatically generated by the OT-domain microservice generator 20 based on the behavior tree in the OT domain. There is no need for the IT-domain code development tool 301 to understand the details of the OT-domain workflow, and the IT-domain code development tool only needs to acquire an identifier (for example, a name) and an IP address of the microservice 40. Developers in the IT domain do not need to understand the OT-domain device and control processes, facilitating implementation and understanding.

To enable the IT domain to call the microservice 40, the IT domain needs to be capable of acquiring information of the microservice 40. Corresponding to the method shown in FIG. 1A, implementations include but are not limited to the following two implementations.

### Manner 1

In manner 1, code developers in the OT domain may notify code developers in the IT domain of names and IP addresses of each generated microservice 40. In this way, the code developers in the IT domain may directly write information of the microservice 40 into code during the development process, so that the microservice 40 can be called by the IT device. Manner 1 is more suitable for scenarios with a small quantity of microservices.

### Manner 2

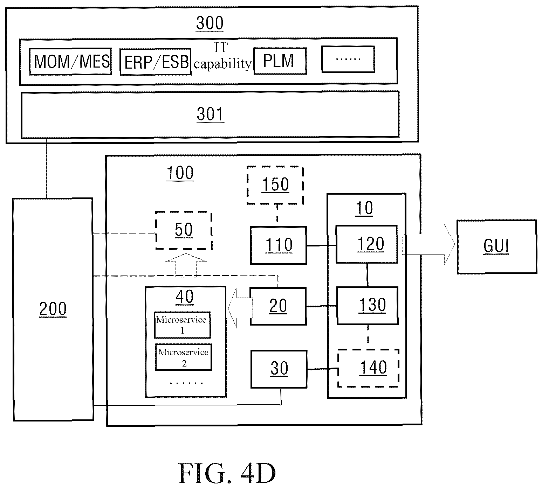

In manner 2, registration and discovery mechanisms may be used. Each microservice 40 is registered on the knowledge platform 200, so that the IT-domain code development tool 301 can be used to enable an IT-domain device to discover, through code development, the connected microservice 40 through the knowledge platform 200. An apparatus that completes registration of the microservice 40 may be an OT-domain microservice generator 20 or a third-party apparatus 50o shown in FIG. 4D. The third-party apparatus 50 may be regarded as a part of the OT-domain low-code development platform 100, or implemented in the knowledge platform 200. Manner 2 is more suitable for scenarios with a large quantity of microservices. The microservice is registered on the knowledge platform, so that the IT device can more effectively call the microservice, and the fusion of the OT domain and IT domain is facilitated.

Optionally, the OT-domain microservice generator 20 may generate an API of the microservice 40 based on the OT-domain behavior tree. The processing in the API may include operations of each function block node in the OT-domain workflow. Input parameters of the API are parameters acquired by the input port of the OT-domain workflow, and output parameters of the API are parameters output by an output port of the OT-domain workflow.

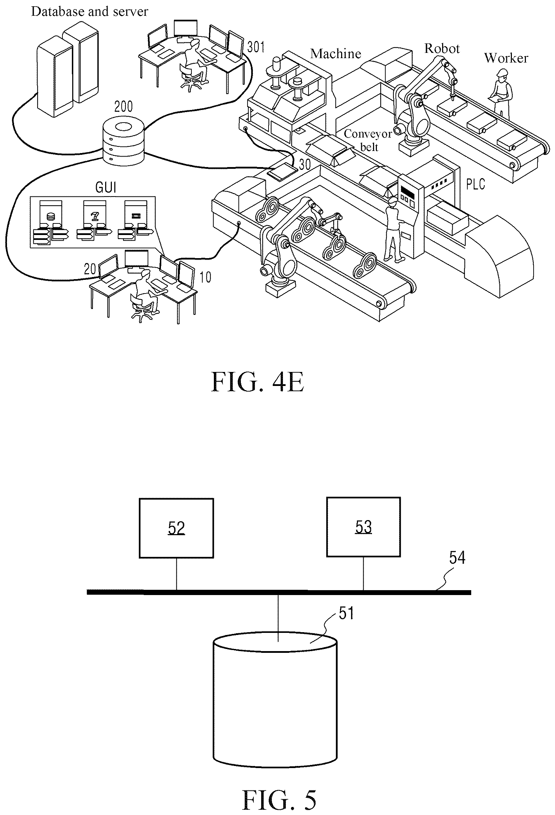

An application scenario of the OT-domain low-code development platform 100 provided by this embodiment of this application in the field of industrial automation is shown in FIG. 4E. The low-code development tool 10 generates a behavior tree corresponding to the OT-domain workflow under the user's operation. The OT-domain workflow defines operations to be performed in a production line of one workcell shown on the right side of FIG. 4E. The corresponding workflow generated based on the behavior tree is published to the runtime 30, so that the runtime 30 controls the completion of operations of the production line of the workcell. In addition, a corresponding microservice may be generated by the microservice generator 20 based on the behavior tree and registered in the knowledge platform 200, so that the IT-domain code development tool 301 can call the corresponding microservice through the knowledge platform 200. As shown in the GUI in the lower left corner of FIG. 4E, the user may edit each node including the function block node by dragging and editing the OT-domain behavior tree, for example, first acquire required data (such as workpiece processing parameters) from a database and a server through the knowledge platform 200 and control operation of the entire workcell. The workcell here is a production line. The production line includes a machine, a conveyor belt, a robotic arm, a worker, a PLC, an AGB, and the like. During specific implementation, the IT-domain code development tool 301 may also be located on the same hardware device, such as the same computer, as the low-code development tool 10.

FIG. 5 is a schematic diagram of a structure of another workflow implementation system according to an embodiment of this application. As shown in FIG. 5, the system may be configured to implement the method shown in any one of FIG. 1A, FIG. 1E, and FIG. 1F, or to implement the workflow implementation system shown in any one of FIG. 3A to FIG. 3C, or to implement the workflow implementation system, that is the OT-domain low-code development platform 100, shown in any one of FIG. 4A to FIG. 4D. The foregoing OT-domain low-code development tool 10, OT-domain microservice generator 20, runtime 30, and third-party apparatus 60 may all be implemented as individual hardware devices, such as servers, work stations, single-chip microcomputers, or processing chips. Alternatively, these apparatuses are implemented on the same hardware device. The apparatuses are used as a software program to be stored in at least one memory, and implement the foregoing low-code development method in the OT domain by calling at least one processor. The node library 110, the resource library 150, and each generated microservice 40 may be stored in at least one memory.

As shown in FIG. 5, the system may include at least one memory 51, at least one processor 52, and at least one display 53. In addition, some other components may also be included, such as a communication port (not shown in FIG. 5). These components communicate with each other via a bus 54.

The at least one memory 51 is configured to store a computer program. The at least one memory 51 may include computer-readable medium, such as a random access memory (RAM). In addition, the at least one memory 51 may also store an operating system and the like. The operating system includes but is not limited to an Android operating system, a Symbian operating system, a Windows operating system, a Linux operating system, and the like. The foregoing computer storage program may include the following program module: the node library 110, the graphical interface module 120, the editing processing module 130, and the analysis and deployment module 140. Optionally, the computer storage program may further include the OT-domain microservice generator 20, the runtime 30, and the third-party apparatus 50.

The at least one processor 52 is configured to call the computer program stored in the at least one memory 51 to perform the workflow implementation method in embodiments of this application. The at least one processor 52 may be a microprocessor, an application-specific integrated circuit (ASIC), a digital signal processor (DSP), a central processing unit (CPU), a graphics processing unit (GPU), a state machine, or the like. The at least one processor may receive and send data through the communication port.

The at least one display 53 is configured to display a graphical user interface.

Specifically, the at least one processor 52 is configured to call the computer program stored in the at least one memory 51 to enable the system to perform operations in the workflow implementation method in any of the foregoing implementations.

In addition, the communication interface is configured to implement communication with another device, such as communication with the knowledge platform 200.

In this embodiment of this application, the OT-domain low-code development tool 10 configured to implement the graphical interface module 120, the editing processing module 130 and the analysis and deployment module 140 may be a lightweight web-based application and may be implemented on an industrial site (such as an edge device or a local server) or in the cloud (a public cloud such as an AWS or a private cloud such as OpenStack). A visual engineering paradigm of the OT-domain low-code development tool is derived from function block typed diagram (Function Block Typed Diagram, FBTD). The OT-domain microservice generator 20 may use a modern translation programming language to generate a standard API such as RESTful or RPC. The runtime 30 enables simple implementation of the OT-domain workflow and provides openness based on an ecosystem of an open source community (such as Python). The runtime 30 may be deployed on an embedded industrial computer device such as a single board computer (Single Board Computer, SBC).

It should be mentioned that embodiments of this application may include apparatus with an architecture different from that shown in FIG. 5. The foregoing architecture is only exemplary and is configured to explain the workflow implementation method and the workflow implementation method in embodiments of this application.

In addition, an embodiment of this application further provides an IT domain and OT domain fusion system, that is an ITOT system. The IT domain and OT domain fusion system includes an IT device and the workflow implementation system in any one of the foregoing implementations of this application. In addition, the IT domain and OT domain fusion system may further include the IT-domain code development platform 300 shown in FIG. 4C and FIG. 4D.

Furthermore, an embodiment of this application further provides a computer-readable storage medium. The computer-readable storage medium stores computer-readable code. The computer-readable code, when executed by a processor, enables the processor to perform the foregoing workflow implementation method. In addition, an embodiment of this application further provides a computer program product. The computer program product is tangibly stored on a computer-readable medium and includes computer-readable instructions. The computer-readable instructions, when executed, enable at least one processor to perform the steps of the workflow implementation method in embodiments of this application.

Specifically, a system or an apparatus that is provided with a storage medium may be provided. The storage medium stores computer-readable code that implements functions of any one of the foregoing implementations of embodiments, and a computer (a CPU or an MPU) of the system or the apparatus is enabled to read and execute the computer-readable code stored in the storage medium. In addition, some or all of actual operations may be completed by an operating system and the like operating on the computer based on instructions of the computer-readable code. The computer-readable code read from the storage medium may be further written into a memory provided in an expansion board inserted into the computer or into a memory provided in an expansion unit connected to the computer, and then some or all of actual operations may be completed by a CPU and the like installed on the expansion board or the expansion unit based on instructions of the computer-readable code to implement functions of any one of the foregoing implementations. In this embodiment, embodiments of computer-readable medium include but are not limited to a floppy disk, a CD-ROM, a magnetic disk, an optical disc (such as CD-ROM, CD-R, CD-RW, DVD-ROM, DVD-RAM, DVD-RW, and DVD+RW), a memory chip, a ROM, an RAM, an ASIC, a configured processor, an all-optical media, all tape or other magnetic media, or any other media from which a computer processor may read instructions. In addition, various other forms of computer-readable medium may send, to a computer, or carry instructions, including routers, private or public networks, or other wired and wireless transmission devices or channels. For example, the computer-readable instructions may be downloaded from a server computer or a cloud through a communication network. Instructions may include code in any computer programming language, including C, C++, C language, Visual Basic, Java, and JavaScript.

It should be noted that not all steps and modules in the procedures and the diagrams of the system structures are necessary, and some steps or modules may be omitted according to an actual requirement. An order of performing steps is not fixed and may be adjusted according to a requirement. The system structure described in embodiments may be a physical structure or a logical structure. That is, some modules may be implemented by the same physical entity, or some modules may be implemented by a plurality of physical entities, or may be implemented by some components in a plurality of independent devices together.

The foregoing descriptions are merely preferred embodiments of the present invention, but are not intended to limit the present invention. Any modification, equivalent replacement, or improvement made within the spirit and principle of the present invention shall fall within the protection scope of the present invention.

## Claims

1. A dynamic workflow implementation method, comprising:
constructing a behavior tree comprising a plurality of function block nodes and connection relationships between the function block nodes, wherein at least one of the plurality of function block nodes is bound to a dynamic resource, and the dynamic resource is a placeholder for reference to a plurality of resource instances of a same type; and
analyzing the behavior tree to obtain a workflow representing service operations to be performed by resources comprising the dynamic resource in one workcell, and deploying the workflow to runtime of the corresponding workcell, so that the runtime determines a resource instance of the dynamic resource based on on-site resource data, and controls resources comprising the resource instance to perform the operations based on the workflow.

2. The dynamic workflow implementation method according to claim 1, wherein the dynamic resource has one resource description, the resource description has placeholders of method steps for guiding instantiation of the dynamic resource, the placeholder of each method step is connected to one function block node that implements the method step, and all related function block nodes jointly generate a corresponding dynamic resource flow; and
that the runtime determines a resource instance of the dynamic resource based on an on-site resource comprises: the runtime determines, based on the dynamic resource flow, the resource instance of the dynamic resource based on the on-site resource data.

3. The dynamic workflow implementation method according to claim 2, wherein one of the plurality of resource instances of the dynamic resource is set as a default resource instance; and
the dynamic resource flow comprises:
a boxing function block, configured to determine an available resource instance of the plurality of resource instances among the dynamic resource based on the on-site resource data, and determine the default resource instance;
a mutex lock function block, configured to lock, when a plurality of branches in a parallel workflow use a same dynamic resource simultaneously, the dynamic resource for a current branch by triggering a resource acquisition message, wherein each branch comprises at least one function block node, and the at least one function block is bound to the dynamic resource; and
a mutex unlock function block, configured to release the dynamic resource to another branch after execution of the current branch ends, wherein the another branch uses a polling manner to trigger the resource acquisition message to lock the dynamic resource for the current branch when the dynamic resource is released.

4. The dynamic workflow implementation method according to claim 3, wherein the resource acquisition message is:
an Acquire message for stopping another parallel branch; or
a Try Acquire message for not stopping another parallel branch.

5. The dynamic workflow implementation method according to claim 3, wherein the dynamic resource flow further comprises:
an unboxing function block, configured to specify a resource instance for the dynamic resource based on the on-site resource data.

6. The dynamic workflow implementation method according to claim 5, wherein the method steps for guiding instantiation of the dynamic resource comprise:
Set Default, connected to the boxing function block;
Acquire and Try Acquire, connected to the mutex lock function block;
Release, connected to the mutex unlock function block; and
Get Resource, connected to the unboxing function block.

7. The dynamic workflow implementation method according to claim 2, wherein that the placeholder of each method step is connected to one function block node that implements the method step comprises: the placeholder of the method step is connected, through a hook function, to one function block node that implements the method step.

8. The dynamic workflow implementation method according to any one of claims 1 to 7, wherein the plurality of resource instances of the dynamic resource are represented in a form of a resource tree, and the dynamic resource has a dynamic injection node for adding a new resource instance, so that the runtime injects the new resource instance for the dynamic resource based on the on-site resource data.

9. A dynamic workflow implementation system, comprising:
a behavior tree construction module, configured to construct a behavior tree comprising a plurality of function block nodes and connection relationships of the function block nodes, wherein at least one of the plurality of function block nodes is bound to a dynamic resource, and the dynamic resource is a placeholder for reference to a plurality of resource instances of a same type; and
an analysis and deployment module (140), configured to analyze the behavior tree to obtain a workflow representing service operations to be performed by resources comprising the dynamic resource in one workcell, and deploy the workflow to runtime of the corresponding workcell, so that the runtime determines a resource instance of the dynamic resource based on on-site resource data, and controls resources comprising the resource instance to perform the operations based on the workflow.

10. A dynamic workflow implementation system, comprising:
at least one memory (51), configured to store computer-readable code; and
at least one processor (52), configured to call the computer-readable code to perform the steps of the dynamic workflow implementation method according to any one of claims 1 to 8.

11. An IT domain and OT domain fusion system, comprising:
an IT device; and
the dynamic workflow implementation system according to any one of claims 9 and 10, wherein the workflow is an OT-domain workflow; the workcell is a workcell in an OT domain; the resources are OT resources; and the dynamic workflow implementation system further comprises: an OT-domain microservice generator (20), configured to generate one microservice (40) based on the behavior tree, to enable the IT device to trigger, by calling the microservice (40), runtime (30) of the workcell to execute the OT-domain workflow.

12. A computer-readable medium, wherein the computer-readable medium stores computer-readable instructions, and the computer-readable instructions, when executed by a processor, enable the processor to perform the steps of the dynamic workflow implementation method according to any one of claims 1 to 8.

13. A computer program product, wherein the computer program product is tangibly stored on a computer-readable medium and comprises computer-readable instructions, and the computer-readable instructions, when executed, enable at least one processor to perform the steps of the dynamic workflow implementation method according to any one of claims 1 to 8.
